# EUROPEAN PATENT SPECIFICATION

(11) **EP 0 889 190 B1**
(45) Date of publication and mention of the grant of the patent: **15.10.2003**
(21) Application number: 98305251.5
(22) Date of filing: 01.07.1998
(51) Int. Cl.: E05F 3/12, F16K 1/02, F16K 31/50

(54) **Control device for door closer**
Steuereinrichtung für Türschliesser
Dispositif de commande pour ferme-porte

(30) Priority: 04.07.1997 FI 972856
(43) Date of publication of application: 07.01.1999
(73) Proprietor: Abloy Oy, 80100 Joensuu (FI)
(72) Inventor: Junttila, Jaakko, 80160 Joensuu (FI)
(74) Representative: Newby, Martin John

(56) References cited:
- AT-B- 219 450
- CH-A- 501 134
- US-A- 1 770 250
- US-A- 4 019 534
- US-A- 4 176 981
- US-A- 4 575 043
- US-A- 4 776 566

## Description

This invention relates to a control device, e.g. for use in a door closer, in accordance with the preamble of claim 1 and as disclosed in US-A-1 770250. The invention also relates to a control arrangement provided with such a control device and to closing apparatus for a door, window or the like.

In a known type of closing apparatus for a door, window or the like which makes use of a pressure medium, a piston means displaces the pressure medium from one chamber to another through different flow channels according to the movements of the door or other wing member. By restricting and, when necessary, controlling the flows through the flow channels, the opening speed and the closing speed of the door may be influenced during the different stages of the opening and closing movements. It is thus possible to control, for example, the starting speed and end speed of the normal closing movement; to provide an "opening brake", by which the door is prevented from being "grabbed" by the wind during the opening movement, particularly when the door is open, for instance, more than 60°; and to provide closing retardation, by which correspondingly the closing of the door can be slowed down at the beginning stage of the closing movement to facilitate passing through. Potentially, a door closer may include a separate control device for each of a number of flow channels.

A control device is conventionally used to control the rate of flow of the pressure medium. Typically a known control device comprises a screw-threaded control member which is adjustably mounted in the door closer to provide the required control. The control member is formed according to the respective need for control of the flow, and its position of placement (the particular flow channel to be controlled). Traditionally the control device is made in one part, and different control devices are used for different purposes and placements. In this way good control can be accomplished. However, a problem with this solution is the requirement of high accuracy in manufacture, because even a slight axial eccentricity of the control surface of the screw threaded control member may result in the control surface being damaged as the control device is turned. Furthermore, even a small change in the structure of the door closer may require a complete redesign of the control portion of the control device, thus requiring the entire control device to be replaced with a new one.

It is also known to use a screw member which is turnable by means of a tool from outside of the door closer to separately control another control member which influences the flow of pressure medium. A solution of this kind is disclosed in publication AT 219450 which describes a separate control member which is pressed against a screw member by means of a spring. In this case, the control means comprises two separate parts which are not attached to each other as one unit before mounting into the door closer. The two parts are only pressed against each other by the spring when the control screw is mounted ready for use in the door closer. This known solution is relatively complicated and functionally uncertain and the mounting and handling of the control means is quite difficult.

US-A-4 776566 discloses an ON/OFF valve which includes a valve member movable against a valve seat. The valve is not for use in controlling fluid flows in a door closer. There is no problem with the durability of the valve head since it is not hallow.

An aim of the invention is to provide a novel control device, typically for a door closer or the like, which is based upon the use of two separate parts, from which the deficiencies of the prior art are eliminated. Another aim of the invention is to provide a control device which is constructionally advantageous and durable and which is also advantageous from the viewpoint of manufacturing technique. A further aim is to provide for precise control of the flow of pressure medium, e.g. so as to be usable for several applications and purposes in controlling and adjusting the flow of pressure medium in a door closer or the like.

According to one aspect of the present invention there is provided a control device as claimed in the ensuing claim 1. With such a control device a simple structure achieved with little or no relative axial movement between the attachment member and control member which allows for precise control. However, the solution allows a slight movement of the parts in the radial direction and, thus, some eccentricity between the adjustment member and the control member and therefore is also advantageous as to manufacturing technique. The solution further provides for the use of different control members for different purposes with the same adjustment member.

If the control member is freely turnable with respect to the adjustment member, it does not necessarily have to turn with the adjustment member when the latter is screwed in or out, thereby minimising the risk of damage to the control surfaces of the control member.

In practice the adjustment member has an attachment end for attachment to the control member and which, with advantage, comprises a shaft member having a guide shoulder. Correspondingly an end portion of the control member to be attached to the adjustment member has an opening at least substantially in the form and size of the shaft member and the guide shoulder to enable the attachment end of the adjustment member to be radially moved into and out of the opening in order, respectively, to assemble and to dissemble the control device. In this way the parts can be simply and quickly mounted to each other.

Furthermore, the opening of the control member may with advantage be provided with a small lug at least at the position of the shaft member so that the adjustment member is normally held in place inside the control member. In this way the control device can be handled as one unit.

The adjustment member and the control member may also be of a different material, which provides for selecting the materials according to the qualities of each part, simplicity of manufacture and manufacturing costs. The control member may for instance be of plastics material.

According to other aspects of the invention there is provided a control arrangement as claimed in the ensuing claim 6 and a closing arrangement for a door, a window or the like as claimed in the ensuing claim 7.

Embodiments of the invention will now be described, by way of example only, with particular reference to the accompanying drawings, in which:
Figures 1a and 1b show in side view, partly in section, one embodiment of a control device according to the invention in two different turning positions;
Figures 2a and 2b show in side view, partly in section, another embodiment of a control device according to the invention in two different turning positions; and
Figure 3 shows a modification of the control device according to Figure 1 mounted in the body of a door closer.

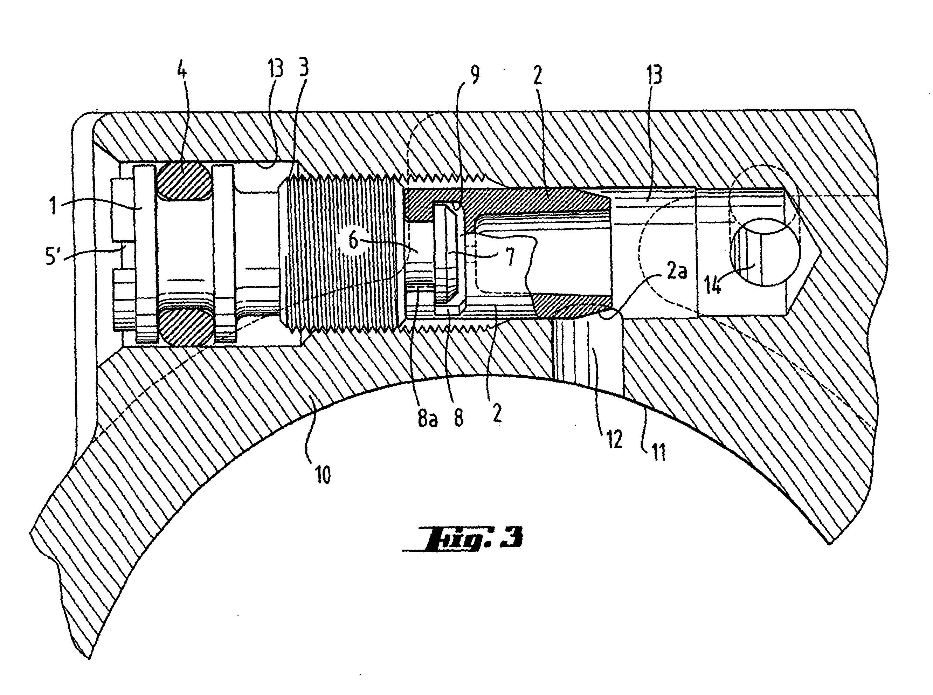

In each of the embodiments shown in the drawings, reference numeral 1 refers to an adjustment member of the control device and reference numeral 2 refers to a substantially hollow or tubular control member attachable to the adjustment member. The adjustment member 1 has screw threads 3 for adjustably positioning the adjustment member 1 in an opening or bore 13 formed in a body 10 of a door closer (cf. Fig. 3), counter surfaces 5 for receiving a suitable tool (not shown) and a ring seal 4. By turning the adjustment member 1 by means of the tool, the axial position of the control device in the bore 13 can be adjusted.

The adjustment member 1 has at its end remote from the counter surfaces 5 a shaft member 6 and a guide shoulder 7. The end portion of the control member 2 to which the adjustment member 1 is attached is provided with an opening 8 having generally the form and size of the shaft member 6 and the guide shoulder 7. The shaft member 6 and guide shoulder 7 are inserted in the radial direction through the opening 8 into an inner chamber 9 of the control member 2 in order to assemble the control device. The opening 8 is provided with a small lug 8a which assists in holding the parts 1 and 2 together when they are normally attached to each other. The control member 2 is with advantage made of a plastics material, whereby radially inserting the parts 6 and 7 of the adjustment member 1 through the opening 8 past the lug 8a and into the inner chamber 9 of the control member 2 can be achieved relatively easily without damage to the control member 2. In a similar manner, the shaft member 6 and guide 7 can be moved radially outwardly from the opening 8 to detach the control member 2 from the adjustment member 1.

A control device according to the invention allows the adjustment member 1 and the control member 2 to be attached to each other so that the connection is practically without clearance in the axial direction, which provides for precise control of the control device. At the same time, however, the inner chamber 9 may be dimensioned with a suitable small clearance so as to allow the adjustment member 1 to turn relative to the control member 2 and to accommodate slight relative movement in the radial direction. By allowing for such relative movements the risk of damage to the control member 2, when turning the control device, resulting from possible mutual eccentricity of the axes of the adjustment member 1 and the control member 2, is reduced or minimised. The provision of such a slight clearance in the radial direction, however, does not have any harmful effect on the function of the control member or on the precision of control.

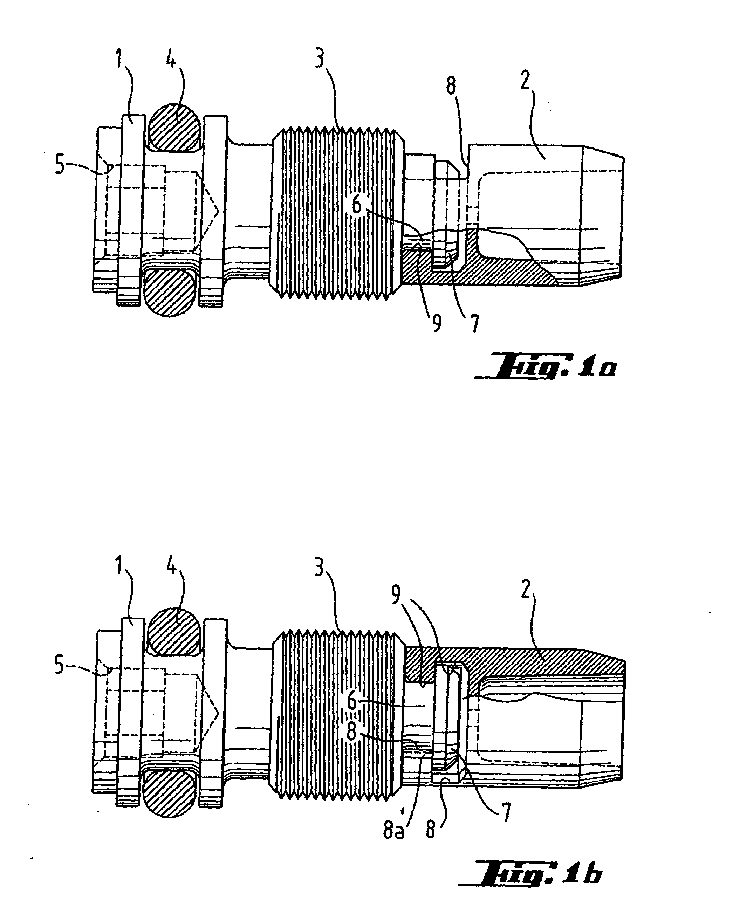

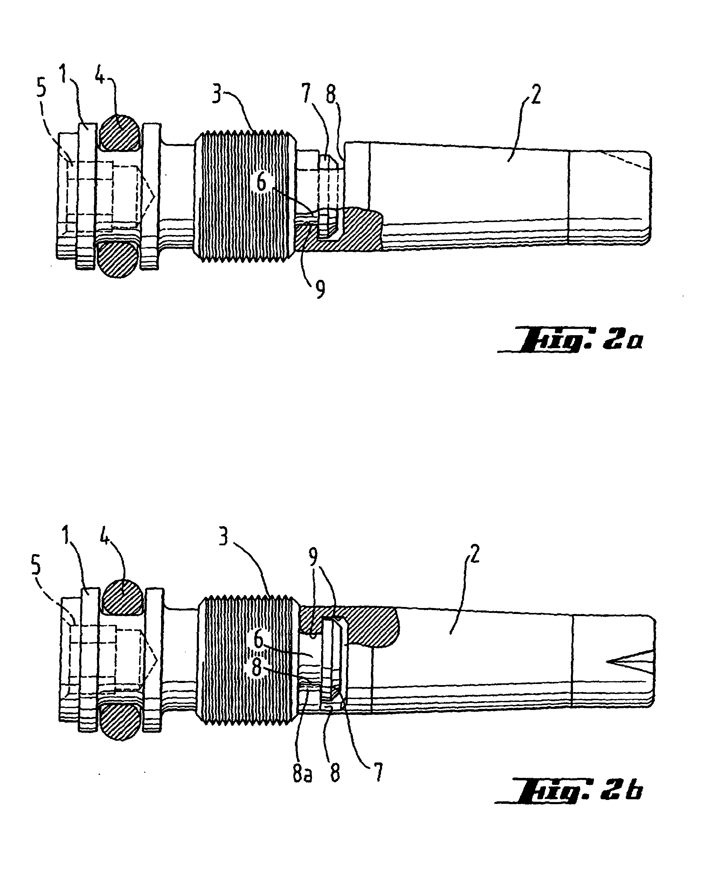

The turning position between Figures 1a and 1b and, respectively, Figures 2a and 2b is about 90°. As is apparent from these Figures, different control members 2 may be used with the same adjustment member 1 for different objects to be controlled. Naturally the control member 2 can also be easily replaceable when necessary.

Figure 3 shows by way of example how a control device according to the invention is mounted in the bore 13 of the body 10 of a door closer. Pressure medium displaced by a piston means (not shown) moving in a chamber 11 of the door closer, as a result of movement of the door, is led through a throttle channel 12, the inner part of the bore 13 and a channel 14 where it is then led to other parts of the body of the door closer. A guide surface or edge 2a of the control member 2 restricts the flow of the pressure medium through the opening of the throttle channel 12 so that the opening movement and the closing movement of the door take place in a desired and controlled manner following control principles known per se. Thus, the position of control device in the bore 13 is able to control the flow of pressure fluid for controlling, for example, the starting speed or the end speed of the door, the opening "brake" or the "closing retardation".

The adjustment of the control is achieved simply with the use of a suitable tool turning the adjustment member 1 of the control device, whereby the adjusting movement is transferred with precision to the control member of the control device for actually affecting the flow of the pressure medium. The control devices of Figures 1 and 3 differ from each other mainly with respect to the tool suitable therefor. The counter surface 5 of the control device in Figure 1 is suitable for a hexagonal socket screw key whereas the counter surface 5' of the control device in Figure 3 is suitable for a conventional screw driver.

The invention is not restricted to the disclosed embodiments, but several modifications are feasible within the scope of the attached claims.

## Claims

1. A control device adjustably positionable in an opening having a longitudinal axis for controlling the flow of pressure medium within a body part (10) of a door closer or the like in which the opening is included, the control device comprising a screw-threaded adjustment member (1) for screw-threaded engagement in the body part opening and a separate substantially hollow control member (2) for restricting the flow of pressure medium when necessary, whereby, in use, turning of the control device with respect to the body part (10) brings about movement of the control member (2) in the opening in the axial direction for providing the desired control, **characterised in that** the control member (2) is movable relative to the adjustment member (1) in the radial direction for attachment to, and detachment from, the adjustment member (1) but, when attached to adjustment member (1) is not movable relative to the latter in the axial direction.

2. A control device according to claim 1, **characterised in that** the control member (2) is freely turnable with respect to the adjustment member (1).

3. A control device according to claim 1 or 2, **characterised in that** the adjustment member (1) has an attachment end for attachment to the control member (2) comprising a shaft member (6) having a guide shoulder (7) at a free end thereof, and that an end portion of the control member (2) to be attached to the adjustment member (1) is provided with an opening (8) which has at least substantially the same configuration and size as said shaft member (6) and said guide shoulder (7) to enable the attachment end of the adjustment member (1) to be radially moved into and out of said opening (8) in order, respectively, to assemble and to dissemble, the control device.

4. A control device according to claim 3, **characterised in that** said opening (8) of the control member (2) is provided with a lug (8a) at least at the position of said shaft member (6) so that the adjustment member (1) is normally held in place inside the control member (2) when the adjustment member is attached to the control member.

5. A control device according to any one of the preceding claims, **characterised in that** the adjustment member (1) and the control member (2) comprise different materials.

6. A control arrangement comprising a body part (10) having an opening with a longitudinal axis and a control device according to any one of the preceding claims screw-threadedly engaged in said opening, the adjustment member (1) being turnable to adjust the axial position of the control member (2) within the opening.

7. Closing apparatus for a door, window or the like, provided with a control arrangement according to claim 6.

## Patentansprüche

1. Regelungsvorrichtung, die in einer Öffnung mit einer Längsachse einstellbar positioniert werden kann, um den Strom von Druckmedium innerhalb eines die Öffnung beinhaltenden Körperteils (10) eines Türschließers oder dergleichen zu regeln, wobei die Regelungsvorrichtung ein mit Schraubengewinde versehenes Einstellelement (1) für einen Schraubengewindeeingriff mit der Körperteilöffnung und ein separates, im wesentlichen hohles Regelungselement (2) umfaßt, um den Strom von Druckmedium bei Bedarf einzuschränken, so daß im Gebrauch ein Drehen der Regelungsvorrichtung im Verhältnis zum Körperteil (10) eine Bewegung des Regelungselements (2) in der Öffnung in der axialen Richtung zur Folge hat, um die erwünschte Regelung zu bewirken, **dadurch gekennzeichnet, daß** das Regelungselement (2) im Verhältnis zum Einstellelement (1) in der radialen Richtung bewegbar ist, so daß es am Einstellelement (1) befestigt bzw. davon gelöst werden kann, das aber, wenn es am Einstellelement (1) befestigt ist, im Verhältnis zum letzteren in der axialen Richtung nicht bewegbar ist.

2. Regelungsvorrichtung nach Anspruch 1, **dadurch gekennzeichnet, daß** das Regelungselement (2) im Verhältnis zum Einstellelement (1) frei drehbar ist.

3. Regelungsvorrichtung nach Anspruch 1 oder 2, **dadurch gekennzeichnet, daß** das Einstellelement (1) ein Befestigungsende zur Befestigung am Regelungselement (2) besitzt, das ein Wellenelement (6) mit einer Führungsschulter (7) an einem freien Ende davon umfaßt, und daß ein Endabschnitt des am Einstellelement (1) zu befestigenden Regelungselements (2) mit einer Öffnung (8) versehen ist, die zumindest im wesentlichen die gleiche Konfiguration und Größe wie das Wellenelement (6) und die Führungsschulter (7) aufweist, so daß das Befestigungsende des Einstellelements (1) radial in die Öffnung (8) hinein- bzw. aus der Öffnung herausbewegt werden kann, um die Regelungsvorrichtung zu montieren bzw. zu demontieren.

4. Regelungsvorrichtung nach Anspruch 3, **dadurch gekennzeichnet, daß** die Öffnung (8) des Regelungselements (2) mindestens an der Position des Wellenelements (6) mit einem Ansatz (8a) versehen ist, um das Einstellelement (1) normalerweise innerhalb des Regelungselements (2) an seinem Platz zu halten, wenn das Einstellelement am Regelungselement befestigt wird.

5. Regelungsvorrichtung nach einem der vorstehend aufgeführten Ansprüche, **dadurch gekennzeichnet, daß** das Einstellelement (1) und das Regelungselement (2) unterschiedliche Materialien umfassen.

6. Regelungsanordnung, die ein Körperteil (10) mit einer eine Längsachse aufweisenden Öffnung und eine Regelungsvorrichtung nach einem der vorstehend aufgeführten Ansprüche für einen Schraubengewindeeingriff mit der Öffnung umfaßt, wobei das Einstellelement (1) drehbar ist, um die axiale Position des Regelungselements (2) innerhalb der Öffnung einzustellen.

7. Schließvorrichtung für eine Tür, für ein Fenster oder dergleichen, die mit einer Regelungsanordnung nach Anspruch 6 ausgestattet ist.

## Revendications

1. Dispositif de commande dont la position est réglable dans une ouverture ayant un axe longitudinal pour contrôler l'écoulement d'un milieu de pression dans une partie de corps (10) d'un ferme-porte ou appareil similaire, dans lequel l'ouverture est incluse, le dispositif de commande comprenant un élément de réglage fileté (1) pour un engagement fileté dans l'ouverture de la partie de corps et un élément de commande séparé sensiblement creux (2) pour limiter l'écoulement du milieu de pression quand cela est nécessaire, dans lequel, durant l'utilisation, la rotation du dispositif de commande par rapport à la partie de corps (10) cause le mouvement de l'élément de commande (2) dans l'ouverture, dans le sens axial, pour fournir la commande désirée, **caractérisé en ce que** l'élément de commande (2) peut être déplacé par rapport à l'élément de réglage (1) dans le sens radial pour la fixation à, et la dépose de, l'élément de réglage (1) mais qui, quand il est fixé à l'élément de réglage (1) ne peut pas être déplacé par rapport à ce dernier dans le sens axial.

2. Dispositif de commande selon la revendication 1, **caractérisé en ce que** l'élément de commande (2) peut tourner librement par rapport à l'élément de réglage (1).

3. Dispositif de commande selon la revendication 1 ou 2, **caractérisé en ce que** l'élément de réglage (1) a une extrémité de fixation pour la fixation à l'élément de commande (2) comprenant un élément d'arbre (6) ayant un épaulement de guidage (7) à une extrémité libre de celui-ci, et **en ce qu'**une partie d'extrémité de l'élément de commande (2) destinée à être fixée à l'élément de réglage (1) est pourvue d'une ouverture (8) qui a au moins sensiblement la même configuration et la même taille que ledit élément d'arbre (6) et ledit épaulement de guidage (7) pour permettre à l'extrémité de fixation de l'élément de réglage (1) d'être déplacée dans le sens radial dans et hors de ladite ouverture (8) afin d'assembler et de désassembler respectivement le dispositif de commande.

4. Dispositif de commande selon la revendication 3, **caractérisé en ce que** ladite ouverture (8) de l'élément de commande (2) est pourvue d'un ergot (8a) du moins à la position dudit élément d'arbre (6) de telle manière que l'élément de réglage (1) est normalement maintenu en place à l'intérieur de l'élément de commande (2) quand l'élément de réglage est fixé à l'élément de commande.

5. Dispositif de commande selon l'une quelconque des revendications précédentes, **caractérisé en ce que** l'élément de réglage (1) et l'élément de commande (2) comportent des matériaux différents.

6. agencement de commande comprenant une partie corps (10) ayant une ouverture avec un axe longitudinal et un dispositif de commande selon l'une quelconque des revendications précédentes, engagé par filetages dans ladite ouverture, l'élément de réglage (1) pouvant être tourné pour régler la position axiale de l'élément de commande (2) dans l'ouverture.

7. Appareil de fermeture pour une porte, une fenêtre ou accessoire similaire, pourvu d'un agencement de commande selon la revendication 6.
